# EUROPÄISCHE PATENTSCHRIFT

(11) **EP 1 159 656 B1**
(45) Veröffentlichungstag und Bekanntmachung des Hinweises auf die Patenterteilung: **21.05.2003**
(21) Anmeldenummer: 00926675.0
(22) Anmeldetag: 09.03.2000
(51) Int. Cl.: G05B 19/05

(54) **AUTOMATISIERUNGSSYSTEM MIT WIEDERVERWENDBAREN AUTOMATISIERUNGSOBJEKTEN UND VERFAHREN ZUR WIEDERVERWENDUNG VON AUTOMATISIERUNGSLÖSUNGEN IN ENGINEERING-WERKZEUGEN**
AUTOMATION SYSTEM WITH RE-USABLE AUTOMATION OBJECTS AND METHOD FOR THE RE-USE OF AUTOMATION SOLUTIONS IN ENGINEERING TOOLS
SYSTEME D'AUTOMATISATION COMPRENANT DES OBJETS D'AUTOMATISATION REUTILISABLES ET PROCEDE DE REUTILISATION DE SOLUTIONS D'AUTOMATISATION DANS DES OUTILS TECHNIQUES

(30) Priorität: 09.03.1999 DE 19910311
(43) Veröffentlichungstag der Anmeldung: 05.12.2001
(73) Patentinhaber: SIEMENS AKTIENGESELLSCHAFT, 80333 München (DE)
(72) Erfinder: BECKER, Norbert, D-91058 Erlangen (DE); BIEHLER, Georg, D-90453 Nürnberg (DE); DIEZEL, Matthias, D-90482 Nürnberg (DE); DONNER, Albrecht, D-09236 Markersdorf (DE); ECKARDT, Dieter, D-91074 Herzogenaurach (DE); HERBERTH, Harald, D-90522 Oberasbach (DE); KRÄMER, Manfred, D-90530 Wendelstein (DE); LANGE, Ronald, D-90766 Fürth (DE); LANGKAFEL, Dirk, D-91090 Effeltrich (DE); LEINS, Ralf, D-75228 Ispringen (DE); SCHNEIDER, Karsten, D-91054 Erlangen (DE); WELZ, Ulrich, D-91074 Herzogenaurach (DE); WINDL, Helmut, D-93077 Bad Abbach (DE); MÖLLER-NEHRING, Walter, D-91056 Erlangen (DE); SCHMOLL, Jürgen, D-91801 Markt Berolzheim (DE)
(86) Internationale Anmeldenummer: DE0000739
(87) Internationale Veröffentlichungsnummer: WO00054118

(56) Entgegenhaltungen:
- WO-A-97/11415
- DE-A- 19 624 929
- GERSTNER T ET AL: "RATIONELLES PROJEKTIEREN VON AUTOMATISIERUNGSSYSTEMEN RATIONAL PLANNING OF AUTOMATION SYSTEMS" , AUTOMATISIERUNGSTECHNISCHE PRAXIS - ATP,DE,OLDENBOURG VERLAG. MUNCHEN, VOL. 36, NR. 12, PAGE(S) 42-45 XP000483710 ISSN: 0178-2320 das ganze Dokument
- MICK R O: "CLIENT/SERVER COMPUTING COMES TO THE PLANT FLOOR" , I & CS - INDUSTRIAL AND PROCESS CONTROL MAGAZINE,US,CHILTON COMPANY. RADNOR, PENNSYLVANIA, VOL. 66, NR. 9, PAGE(S) 41-42,47-49 XP000402803 ISSN: 1074-2328 das ganze Dokument
- SELCH M ET AL: "STEP 7-THE FUTURE-ORIENTED PROGRAMMING SYSTEM FOR THE NEW SIMATIC PROGRAMMABLE CONTROLLERS" , ENGINEERING AND AUTOMATION,DE,SIEMENS AKTIENGESELLSCHAFT, BERLIN, VOL. 16, NR. 2, PAGE(S) 5-6 XP000450160 ISSN: 0939-2068 das ganze Dokument

## Beschreibung

Die Erfindung betrifft ein Automatisierungssystem mit mindestens einem Automatisierungsbaustein, der mindestens ein Automatisierungsobjekt aufweist.

Ein derartiges Automatisierungssystem kommt insbesondere im Bereich der Automatisierungstechnik zum Einsatz. Ein derartiges Automatisierungssystem besteht in der Regel aus einer Vielzahl von einzelnen Automatisierungsobjekten, die häufig eine hohe Abhängigkeit des Automatisierungsobjekts vom jeweils verwendeten Engineeringsystem aufweisen. Dies hat zur Folge, dass häufig Automatisierungsobjekte eines Herstellers ein eigenes Engineeringsystem erfordern und nicht in anderen Systemen mit Automatisierungsobjekten anderer Hersteller verwendbar sind.

In dem Fachartikel Gerstner, Thomas et al: "Rationelles Projektieren von Automatisierungssystemen", Automatisierungstechnische Praxis - ATP, DE, Oldenbourg Verlag, München, Vol. 36, Nr. 12, Seiten 42-45, XP000483710, ISSN: 0178-2320, wird ein PC-gestütztes Engineeringwerkzeug beschrieben, das den Projektierungsaufwand von Automatisierungssystemen reduziert, indem erweiterte Kopierfunktionen und Bibliotheksfunktionen genutzt werden und Standardpläne unterstützt werden.

Der Erfindung liegt die Aufgabe zugrunde, einen Weg für eine Wiederverwendung von bereits erstellten Automatisierungslösungen im Engineering anzugeben.

Diese Aufgabe wird durch ein Verfahren sowie ein System mit den in den Ansprüchen 1 bzw. 4 angegebenen Merkmalen gelöst.

Ziel ist es, die im Rahmen der Entwicklung einer Automatisierungslösung entstehenden (Teil-)Lösungen, die in selber oder ähnlicher Form an anderer Stelle benutzt werden können. Dabei kann es sich um dasselbe Projekt oder ein vollkommen verschiedenes handeln. Der Erfindung liegt die Erkenntnis zugrunde, dass dieses Problem bisher nur unzureichend gelöst wurde. In bisherigen Engineeringsystemen wie dem Engineeringsystem von Siemens Simatic S 7 gibt es ein Bausteinkonzept. Diese Bausteine bieten einen voreingestellten Satz an fester Automatisierungsfunktionalität. Durch Verknüpfen der vorhandenen Bausteine (und ihrer Funktionalität) wird die komplette Automatisierungslösung erstellt.

Das Bausteinkonzept besitzt folgende Nachteile:
- **Herstellerseitige Definition von neun Bausteinen.** Nur der Hersteller des Engineering-Werkzeugs kann neue Bausteine definieren. Der Entwickler einer Automatisierungslösung hat keine Möglichkeit eine von ihm erstellte (Teil-)Lösung zu einem Baustein zu machen.
- **Explizite Programmierung von neuen Bausteinen.** Neue Bausteine müssen explizit programmiert werden, was (erheblichen) Zusatzaufwand bedeutet, da nicht nur ihre Funktionalität programmiert werden muß, sondern auch ihre Integration in das Werkzeug.
- **Bausteine sind sehr generisch.** Zwangsläufig durch die Art ihrer Entwicklung sind die Bausteine nicht so maßgeschneidert auf die Bedürfnisse eins speziellen Entwicklers für Automatisierungslösungen, wie wenn dieser die Bausteine selbst abgeleitet hätte.

Das erfindungsgemäße Verfahren basiert auf zwei von einander unabhängigen Konzepten:
1. die Aggregation von Automatisierungsobjekten einer (Teil-)lösung zu einem neuem Automatisierungsobjekt. Dieses läßt sich dann wie jedes andere Automatisierungsobjekt benutzen. Ein solch aggregiertes Automatisierungsobjekt wird im folgenden mit "Compound" bezeichnet.
2. Die automatische Propagierung von Änderungen von Automatisierungsobjekten in einer Bibliothek zu Automatisierungsobjekten in einer Automatisierungslösung. Dies bedeutet, daß Anpassungen in einer Vorlage automatisch in allen verwendeten Instanzen nach gezogen werden. Dieser Mechanismus wird im folgenden mit "zentraler Konstruktionssvorschrift" bezeichnet.

Im folgenden wird die Erfindung anhand der in den Figuren dargestellten Ausführungsbeispiele näher beschrieben und erläutert.

Es zeigen:
- FIG 1: ein Blockschaltbild eines Ausführungsbeispiels zum Aufbau eines Automatisierungsbausteins,
- FIG 2: eine schematische Darstellung für den Prozeßablauf zur Erstellung eines Automatisierungsbausteins als Vorlage,
- FIG 3: ein Ausführungsbeispiel für einen Prozeßablauf zur Erstellung eines Automatisierungsbausteins mit zentraler Konstruktionsvorschrift und
- FIG 4: ein Ausführungsbeispiel für einen Prozeßablauf zur Erstellung eines Automatisierungsbausteins mit duplizierter Konstruktionsvorschrift.

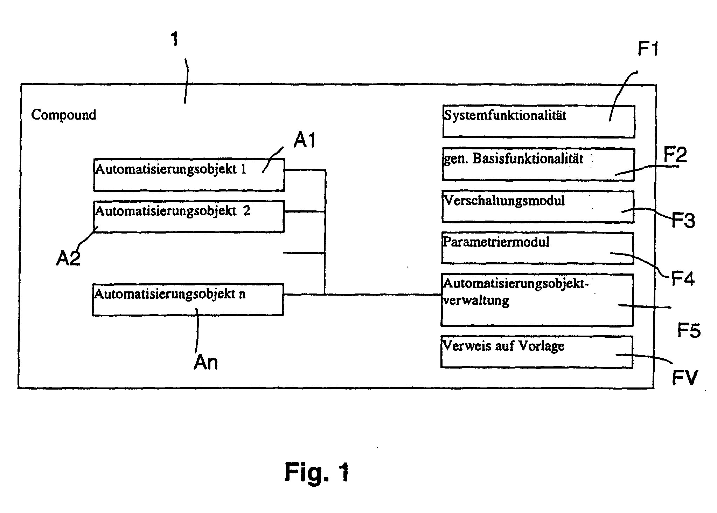

FIG 1 ein Blockschaltbild eines Ausführungsbeispiels zum Aufbau eines Automatisierungsbausteins 1, der im folgenden auch als Compound bezeichnet wird. Ein Compound 1 besteht aus Funktionsbaustein F1..F5, d.h. aus fünf funktionalen Teilen:
- **Systemfunktionalität F1:** Interne Dienste, die im wesentlichen eine Implementierungsbasis für die anderen Teile bieten.
- **Generische Basisfunktionalität F2:** Allgemeine Dienste, die alle Automatisierungsobjekte besitzen und die ihre Hantierung erleichtern. Darunter verbergen sich Dienste wie Speichern und Laden eines Automatisierungsobjekts, Abfragen von Verwaltungsdaten, etc. Es sind dabei jedoch keine technologischen Dienste wie spez. Steuerungsalgorithmen enthalten.
- **Verschaltungsmodul F3:** Erlaubt die Verschaltung des Compound mit anderen Automatisierungsobjekten.
- **Parametrierungsmodul F4:** Erlaubt die Parametrierung des Compound durch entsprechende Parametrierung seiner Teile.
- **Automatisierungsobjektverwaltung F5:** Dienste wie einfügen und Zugriff auf die einzelnen Automatisierungsobjekte. Die Automatisierungsobjekte können dabei selbst wieder Compounds sein. Wurde eines der "Teilautomatisierungsobjekte" mit zentraler Konstruktionsvorschrift erzeugt, so werden Änderungen in dessen Vorlage auch im Compound wirksam.

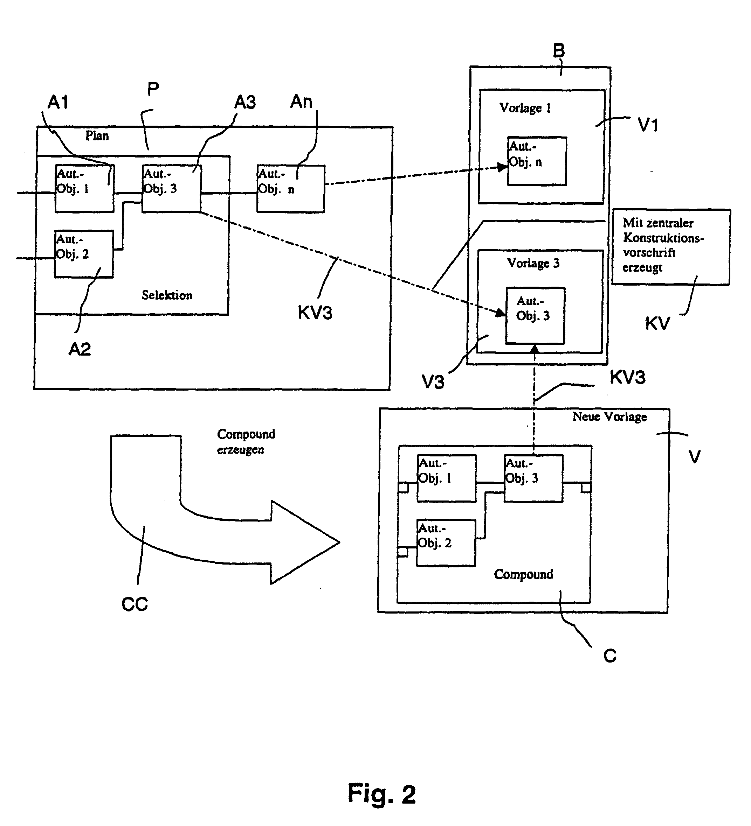

FIG 2 zeigt eine schematische Darstellung für den Prozeßablauf zur Erstellung eines Automatisierungsbausteins als Vorlage. Ausgangspunkt ist ein Automatisierungsplan P, der eine Verschaltung von Automatisierungsobjekten A1..An enthält. Sie Automatisierungsobjekte A1..An basieren auf Vorlagen V1, V3 einer Bibliothek B. Im Automatisierungsplan P ist ein Selektionsbereich S gekennzeichnet, der eine Zusammenschaltung von Automatisierungsobjekten A1, A2, A3 selektiert. Die Automatisierungsobjekte A1..An sind mit ihren Vorlagen der Bibliothek B verknüpft. Dabei wurde das Automatisierungsobjekt A3 mit einer zentralen Konstruktionsvorschrift erzeugt, was durch die Bezugszeichen KV, KV3 graphisch angedeutet werden soll. Zur Erstellung eines neuen Automatisierungsbausteins wird über die als Pfeil graphisch angedeutete Funktion CC durch Selektion des Bereichs S im Automatisierungsplan P eine neue Automatisierungsbaustein in Form des Compound C als neue Vorlage erzeugt.

In der Ausgangssituation gibt es eine bestimmte (Teil-)lösung, die aus verschalteten Automatisierungsobjekten (die auch selbst Compounds sein können) besteht. Zum Erzeugen eines Compounds als Vorlage wird die Menge, die die Teillösung repräsentiert, ausgewählt. Dies kann z.B. graphisch geschehen. Danach wird das Erzeugen des Compounds angestoßen. Dazu wird eine neue Vorlage erzeugt, in die ein leeres Compound eingetragen wird. Danach werden alle ausgewählten Automatisierungsobjekte kopiert und bei dem Compound eingetragen. Alle Verschaltungen innerhalb der selektierten Menge bleiben erhalten, die anderen Verschaltungen werden abgeschnitten. Wurde ein ausgewähltes Automatisierungsobjekt mit zentraler Konstruktionsvorschrift erzeugt, so gilt dies auch für seine Kopie im Compound.

Beim Einfügen der Automatisierungsobjekte in das Compound werden automatisch zwei Module zum Verschalten und Parametrieren des Compounds erzeugt. Das Parametriermodul wird aus den dem Parametriermodulen der Automatisierungsobjekte generiert, das Verschaltungsmodul aus den abgeschnittenen Verschaltungen abgeleitet. Beide Module können durch den Benutzer nachbearbeitet werden.

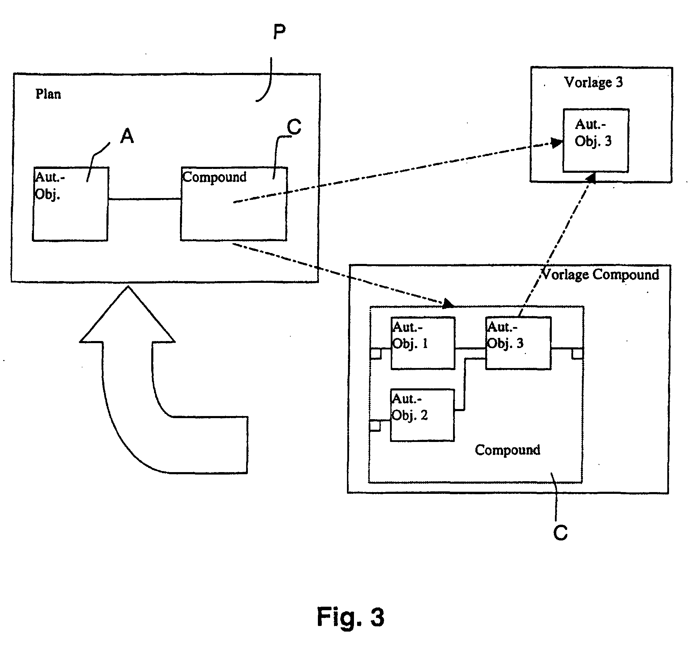

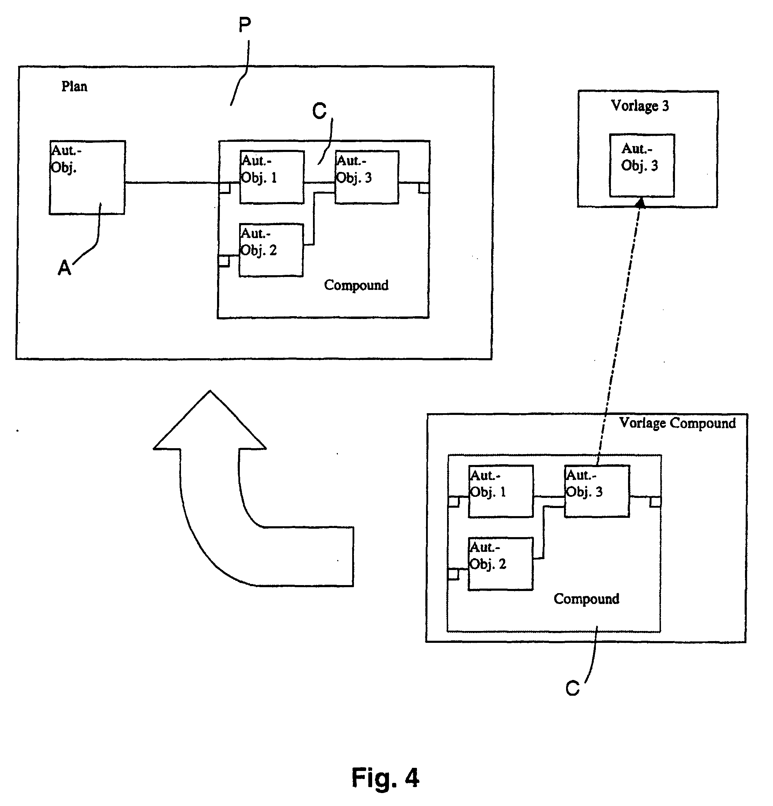

Die Verwendung eines Compounds kann auf zwei Arten geschehen: Es wird eine Instanz eines Compounds in einem Plan aus einer Vorlage mit zentraler Konstruktionsvorschrift oder duplizierter Konstruktionsvorschrift erzeugt werden. In beiden Fällen läßt sich das Compound wie ein ganz normales Automatisierungsobjekt verwenden. Dies wird nachfolgend anhand der FIG 3 und 4 näher erläutert.

FIG 3 ein Ausführungsbeispiel für einen Prozeßablauf zur Erstellung eines Automatisierungsbausteins mit zentraler Konstruktionsvorschrift. Dabei wird die Vorlage des Automatisierungsbausteins C unter Mitnahme der zentralen Konstruktionsvorschrift in einen Automatisierungsplan P eingefügt.

Das Erzeugen einer Instanz mit zentraler Konstruktionsvorschrift bedeutet, daß Änderungen in der Vorlage automatisch an die Instanzen propagiert werden. Dazu lassen sich Instanzen bei ihrer Benutzung bei der Vorlage registrieren, so daß dann das Nachziehen von der Vorlage durch entsprechenden Datenaustausch vorgenommen werden kann. Sind Komponenten des Compounds mit zentraler Konstruktionsvorschrift erzeugt worden, so gilt die auch für die Teile in der Instanz.

FIG 4 ein Ausführungsbeispiel für einen Prozeßablauf zur Erstellung eines Automatisierungsbausteins mit duplizierter Konstruktionsvorschrift. Das Erzeugen einer Instanz mit duplizierter Konstruktionsvorschrift bedeutet, daß die Vorlage vollständig kopiert wird und dadurch die Instanz unabhängig von der Vorlage wird. Änderungen in der Vorlage werden also nicht an die Instanz propagiert. Sind Komponenten des Compounds mit zentraler Konstruktionsvorschrift erzeugt worden, so wird diese Beziehung aufgelöst.

Der wesentliche Unterschied zu bisherigen Lösung besteht in Fähigkeit ad-hoc eine Menge von Automatisierungsobjekten zu einem neuen zu aggregieren. Die beschriebene Lösung hat folgende Vorteile:
- **Einfache Ergtellungen von wiederverwendbaren Lösungen.** Der Entwickler der Automatisierungslösung kann mittels visueller Programmierung (i.e. Drag and Drop, etc.) ein wiederverwendbare Vorlag schaffen.
- **Bausteine sind maßgeschneidert.** Jeder Entwickler kann sich für seine Anwendungsdomäne eine Sammlung von Vorlagen schaffen.
- **Automatisches Nachführen von Änderungen in den.** Mittels der Technik "zentrale Konstruktionsvorschrift" können Änderungen in einer Vorlage an alle betroffenen Automatisierungslösungen propagiert werden. Dies reduziert den Pflegeaufwand beträchtlich.
- **Verringerung der Entwicklungszeit.** Durch das Vorhandensein umfangreicher Bibliotheken mit maßgeschneiderten Teillösungen müssen Anwendungen nicht ständig von Neuem entwickelt werden.

Zusammenfassend betrifft die Erfindung somit ein ein Automatisierungssystem mit mindestens einem Automatisierungsbaustein 1, der mindestens ein Automatisierungsobjekt A1..An aufweist, und mit Funktionsbausteinen F1..F6, die Mittel für eine zentrale Verwaltung und Pflege der Automatisierungsobjekte A1..An enthalten. Hierdurch wird eine herstellerunabhängige Definition neuer Automatisierungsobjekte ggf. unter Verwendung bereits existierender Automatisierungsobjekte möglich, eine aufwendige separate Programmierung neuer Automatisierungslösungen entfällt vollständig oder wird zumindest wesentlich vereinfacht.

## Patentansprüche

1. Verfahren zur Aggregation von auf Vorlagen (V1, V3) einer Bibliothek (B) basierenden Automatisierungsobjekten (A1..An) zu einem neuen Automatisierungsbaustein (1), wobei in einem Automatisierungsplan (P), der eine Verschaltung der Automatisierungsobjekte (A1..An) enthält, eine Zusammenschaltung der Automatisierungsobjekte (A1, A2, A3) in einem Selektionsbereich selektiert wird und die Selektion des Selektionsbereichs den neuen Automatisierungsbaustein (1) als neue. Vorlage erzeugt, wobei alle Verschaltungen innerhalb des Selektionsbereichs erhalten bleiben und die anderen Verschaltungen abgeschnitten werden und wobei in dem neuen Automatisierungsbaustein (1) automatisch ein Verschaltungsmodul (F3) zur Verschaltung des neuen Automatisierungsbausteins (1) mit weiteren Automatisierungsobjekten (A1..An) und ein erstes Parametrierungsmodul (F4) zur Parametrierung des neuen Automatisierungsbausteins (1) erzeugt werden, wobei das erste Parametrierungsmodul (F4) aus zweiten Parametrierungsmodulen (F4) der selektierten Automatisierungsobjekte (A1, A2, A3) generiert wird und das Verschaltungsmodul (F3) aus den abgeschnittenen Verschaltungen abgeleitet wird.

2. Verfahren nach Anspruch 1,
**dadurch gekennzeichnet,**
**dass** Änderungen an den Vorlagen (V1, V3) für die Automatisierungsobjekte (A1..An) in der Bibliothek (B) durch Datenaustausch automatisch zu entsprechenden Änderungen an den Automatisierungsobjekten (A1..An) in verwendeten Instanzen in einer Automatisierungslösung führen.

3. Verfahren nach Anspruch 2,
**dadurch gekennzeichnet,**
**dass** die Automatisierungsobjekte (A1..An) in den verwendeten Instanzen aus den Vorlagen (V1, V3) für die Automatisierungsobjekte (A1..An) erzeugt werden und bei den Vorlagen (V1, V3) registriert werden, wobei die Vorlagen (V1, V3) zentrale Konstruktionsvorschriften enthalten.

4. System zur Aggregation von auf Vorlagen (V1, V3) einer Bibliothek (B) basierenden Automatisierungsobjekten (A1..An) zu einem neuen Automatisierungsbaustein (1), wobei ein Automatisierungsplan (P) eine Verschaltung der Automatisierungsobjekte (A1..An) enthält, wobei im Automatisierungsplan (P) eine Selektion einer Zusammenschaltung der Automatisierungsobjekte (A1..An) zur Erzeugung des neuen Automatisierungsbaustein (1) als Vorlage vorgesehen ist, wobei alle Verschaltungen innerhalb des Selektionsbereichs erhalten bleiben und die anderen Verschaltungen abgeschnitten werden, und wobei im neuen Automatisierungsbaustein (1) ein aus den abgeschnittenen Verschaltungen abgeleitetes Verschaltungsmodul (F3) zur Verschaltung des neuen Automatisierungsbausteins (1) mit weiteren Automatisierungsobjekten (A1..An) und ein erstes aus zweiten Parametrierungsmodulen (F4) der selektierten Automatisierungsobjekte (A1, A2, A3) generiertes Parametrierungsmodul (F4) zur Parametrierung des neuen Automatisierungsbausteins (1) vorgesehen ist.

5. System nach Anspruch 4,
**dadurch gekennzeichnet,**
**dass** ein Datenaustausch zur automatischen Weitergabe von Änderungen an den Vorlagen (V1, V3) für die Automatisierungsobjekte (A1..An) in der Bibliothek (B) an die Automatisierungsobjekte (A1..An) in verwendeten Instanzen in einer Automatisierungslösung vorgesehen ist.

6. System nach Anspruch 5,
**dadurch gekennzeichnet,**
**dass** zentrale Konstruktionsvorschriften in den Vorlagen (V1, V3) zur Erzeugung der Automatisierungsobjekte (A1..An) in den verwendeten Instanzen vorgesehen sind, und das eine Registrierung der Automatisierungsobjekte (A1..An) bei den Vorlagen (V1, V3) vorgesehen ist.

## Claims

1. Method of aggregating automation objects (A1..An), based on models (V1, V3) in a library (B), to form a new automation module (1), whereby in an automation plan (P) containing an interconnection of the automation objects (A1..An) an interconnection of the automation objects (A1, A2, A3) is selected in a selection region and the selection of the selection region creates the new automation module (1) as a new model, whereby all interconnections within the selection region are retained and the other interconnections are cut off, and whereby in the new automation module (1) an interconnection module (F3) for interconnection of the new automation module (1) with further automation objects (A1..An) and a first parameterisation module (F4) for parameterising the new automation module (1) are automatically created, whereby the first parameterisation module (F4) is generated from second parameterisation modules (F4) of the selected automation objects (A1, A2, A3) and the interconnection module (F3) is derived from the cut-off interconnections.

2. Method according to Claim 1, **characterised in that** changes to the models (V1, V3) for the automation objects (A1..An) in the library (B) resulting from exchange of data automatically result in corresponding changes to the automation objects (A1..An) in instances used in an automation solution.

3. Method according to Claim 2, **characterised in that** the automation objects (A1..An) in the instances used are created from the models (V1, V3) for the automation objects (A1..An) and are registered in the models (V1, V3), whereby the models (V1, V3) contain central design specifications.

4. System for aggregating automation objects (A1..An), based on models (VI, V3) in a library (B), to form a new automation module (1), whereby an automation plan (P) contains an interconnection of the automation objects (A1..An), whereby in the automation plan (P) provision is made for selecting an interconnection of the automation objects (A1..An) for creation of the new automation module (1) as a model, whereby all interconnections within the selection region are retained and the other interconnections are cut off, and whereby in the new automation module (1) an interconnection module (F3) derived from the cut-off interconnections is provided for interconnection of the new automation module (1) with further automation objects (A1..An) and a first parameterisation module (F4) generated from second parameterisation modules (F4) of the selected automation objects (A1, A2, A3) is provided for parameterising the new automation module (1).

5. System according to Claim 4, **characterised in that** provision is made for an exchange of data for automatic forwarding of changes to the models (V1, V3) for the automation objects (A1..An) in the library (B) to the automation objects (A1..An) in instances used in an automation solution.

6. System according to Claim 5, **characterised in that** central design specifications are provided in the models (V1, V3) for creation of the automation objects (A1..An) in the instances used, and that provision is made for registering the automation objects (A1..An) in the models (V1, V3).

## Revendications

1. Procédé pour agréger des objets d'automatisation (A1 à An), basés sur des modèles (V1, V3) d'une bibliothèque (B), en un nouveau module d'automatisation (1), dans lequel, dans un plan d'automatisation (P) qui contient une connexion des objets d'automatisation (A1 à An), on sélectionne une interconnexion des objets d'automatisation (A1, A2, A3) dans une zone de sélection et la sélection de la zone de sélection produit le nouveau module d'automatisation (1) comme nouveau modèle, dans lequel on conserve toutes les connexions à l'intérieur de la zone de sélection et on coupe les autres connexions, et dans lequel, dans le nouveau module d'automatisation (1), on produit automatiquement un module de connexion (F3) pour la connexion du nouveau module d'automatisation (1) à d'autres objets d'automatisation (A1 à An) et on produit un premier module de paramétrage (F4) pour le paramétrage du nouveau module d'automatisation (1), le premier module de paramétrage (F4) étant généré à partir de deuxièmes modules de paramétrage (F4) des objets d'automatisation sélectionnés (A1, A2, A3) et le module de connexion (F3) étant déduit des connexions coupées.

2. Procédé selon la revendication 1,
**caractérisé par le fait que** des modifications au niveau des modèles (V1, V3) pour les objets d'automatisation (A1 à An) dans la bibliothèque (B) conduisent automatiquement, par échange de données, à des modifications correspondantes au niveau des objets d'automatisation (A1 à An) dans des instances utilisées dans une solution d'automatisation.

3. Procédé selon la revendication 2,
**caractérisé par le fait qu'**on produit les objets d'automatisation (A1 à An) dans les instances utilisées à partir des modèles (V1, V3) pour les objets d'automatisation (A1 à An) et on les enregistre au niveau des modèles (V1, V3), les modèles (V1, V3) contenant des règles de construction centrales.

4. Système pour agréger des objets d'automatisation (A1 à An), basés sur des modèles (V1, V3) d'une bibliothèque (B), en un nouveau module d'automatisation (1), dans lequel un plan d'automatisation (P) contient une connexion des objets d'automatisation (A1 à An), dans lequel il est prévu dans le plan d'automatisation (P) une sélection d'une interconnexion des objets d'automatisation (A1 à An) pour la production du nouveau module d'automatisation (1) comme modèle, dans lequel toutes les connexions à l'intérieur de la zone de sélection sont conservées et les autres connexions sont coupées, et dans lequel il est prévu dans le nouveau module d'automatisation (1) un module de connexion (F3) déduit des connexions coupées et destiné à la connexion du nouveau module d'automatisation (1) à d'autres objets d'automatisation (A1 à An) et un premier module de paramétrage (F4) généré à partir de deuxièmes modules de paramétrage (F4) des objets d'automatisation sélectionnés (A1, A2, A3) et destiné au paramétrage du nouveau module d'automatisation (1).

5. Système selon la revendication 4,
**caractérisé par le fait qu'**il est prévu un échange de données pour la retransmission automatique de modifications au niveau des modèles (V1, V3) pour les objets d'automatisation (A1 à An) dans la bibliothèque (B) vers les objets d'automatisation (A1 à An) dans des instances utilisées dans une solution d'automatisation.

6. Système selon la revendication 5,
**caractérisé par le fait qu'**il est prévu des règles de construction centrales dans les modèles (V1, V3) pour la production des objets d'automatisation (A1 à An) dans les instances utilisées et qu'il est prévu un enregistrement des objets d'automatisation (A1 à An) au niveau des modèles (V1, V3).
